# EUROPEAN PATENT APPLICATION

(11) **EP 4 691 806 A1**
(43) Date of publication of application: **11.02.2026**
(21) Application number: 24780428.9
(22) Date of filing: 27.03.2024
(51) Int. Cl.: B60G 7/00, B62D 21/00

(54) **STRUCTURAL COMPONENT**

(30) Priority: 27.03.2023 JP 2023049325; 27.03.2023 JP 2023049326
(71) Applicant: NIPPON STEEL CORPORATION, Chiyoda-ku Tokyo 100-8071 (JP)
(72) Inventor: URUSHIBATA, Ryo, Tokyo 100-8071 (JP)
(74) Representative: Zimmermann & Partner Patentanwälte mbB
(86) International application number: PCT/JP2024/012217
(87) International publication number: WO 2024/204322

(57) **Abstract**

A structural component (100, 200, 300, 400) includes a top plate (10) and side walls (21, 22). The structural component (100, 200, 300, 400) includes a curved region (30). The curved region (30) is curved with the top plate (10) side being an inner side of a curve and the opposite side of the top plate (10) being an outer side of the curve, when viewed from the side wall (21, 22) side. In the curved region (30), the side walls (21, 22) are connected by the top plate (10) on the inner side of the curve. The curved region (30) is opened on the outer side of the curve. In the curved region (30), the top plate (10) has a maximum width (Wₘₐₓ) larger than a width (W₀) of the top plate (10) on both end sides of the structural component (100, 200, 300, 400). When the curved region (30) is viewed in transverse cross section, the sum of lengths of the two side walls (21, 22) is larger than the width of the top plate (10).

## Description

### TECHNICAL FIELD

The present disclosure relates to a structural component.

### BACKGROUND ART

For example, a structure such as a vehicle body of an automobile is formed by using a structural component. The structural component is required to have durability against applied loads.

For example, Patent Literature 1 discloses a suspension arm for an automobile. The suspension arm in Patent Literature 1 includes a plate-shaped main body portion, and a pipe-shaped reinforcement part provided on both side edges of the main body portion. Patent Literature 1 describes that this structure increases the second moment of sectional area about an axis that passes through the centroid of the main body portion and that is perpendicular to the main body portion, and thus it is possible to allow the suspension arm to have a sufficient rigidity that can withstand bending loads.

For example, Patent Literature 2 discloses a cross member for an automobile. The cross member in Patent Literature 2 includes a web folded into a saddle shape, a pair of side walls provided on both side edges of the web, and a flange portion provided to a leading end of each of the side walls. In this cross member, the width of the web is gradually increased from both end portions of the web in a longitudinal direction toward a folded portion. Patent Literature 2 describes that the side impact strength at the time of using the cross member by connecting the cross member to a side member can be improved by making the leading ends of the pair of side walls on the flange side open wider than base ends on the web side in the both end portions of the web in the longitudinal direction.

### CITATION LIST

### PATENT LITERATURE

Patent Literature 1: Japanese Patent Application Publication No. 8-188022
Patent Literature 2: Japanese Patent Application Publication No. 2012-111377

### SUMMARY OF INVENTION

### TECHNICAL PROBLEM

Incidentally, some structural components include a curved region in side view, as in a rear upper arm, which is one of suspension arms for automobiles. Such a structural component often has a closed section structure. For example, a structural component having a closed section structure called the monaka structure is formed by placing recessed members to face each other and joining them together by arc welding. However, since rust is likely to occur in an arc welded portion, measures for preventing rusting are required. In addition, the production cost of a structural component may increase by performing arc welding in the production process of the structural component.

When a structural component has an open section structure without arc welded portions, it is possible to prevent rusting in the arc welded portions, and to reduce the production cost of the structural component. However, when a structural component simply has an open section structure, there is a problem in that the rigidity of the structural component is decreased, and a reaction force of the structural component against applied loads is reduced.

An objective of the present disclosure is to provide a structural component capable of exhibiting a high reaction force against an applied load, despite having an open section structure.

### SOLUTION TO PROBLEM

A structural component according to the present disclosure includes a top plate and two side walls. The two side walls are arranged facing each other. The two side walls are each continuous with the top plate. The structural component includes a curved region. When viewed from a side wall side, the curved region is curved with the top plate side being an inner side of a curve and the opposite side of the top plate being an outer side of the curve. In the curved region, the two side walls are connected by the top plate on the inner side of the curve. The curved region is opened on the outer side of the curve. The top plate has a maximum width in the curved region, the maximum width being larger than a width of the top plate on both end sides of the structural component. When the curved region is viewed in transverse cross section, the width of the top plate is a length of a straight line that connects a boundary portion between one side wall of the two side walls and the top plate and a boundary portion between the other side wall and the top plate. When the curved region is viewed in transverse cross section, the sum of lengths of two side walls is larger than the width of the top plate.

### ADVANTAGEOUS EFFECT OF INVENTION

A structural component according to the present disclosure is capable of exhibiting a high reaction force against an applied load, despite having an open section structure.

### BRIEF DESCRIPTION OF DRAWINGS

[FIG. 1] FIG. 1 is a perspective view of a structural component according to a first embodiment.
[FIG. 2] FIG. 2 is a plan view of the structural component according to the first embodiment.
[FIG. 3] FIG. 3 is a side view of the structural component according to the first embodiment.
[FIG. 4] FIG. 4 is a transverse cross-sectional view of the structural component according to the first embodiment.
[FIG. 5] FIG. 5 is another transverse cross-sectional view of the structural component according to the first embodiment.
[FIG. 6] FIG. 6 is a perspective view of a structural component according to a second embodiment.
[Fig. 7] FIG. 7 is a perspective view of a structural component according to a third embodiment.
[FIG. 8] FIG. 8 is a plan view of the structural component according to the third embodiment.
[FIG. 9] FIG. 9 is a transverse cross-sectional view of the structural component according to the third embodiment.
[FIG. 10] FIG. 10 is a perspective view of a structural component according to a modification of the third embodiment.
[FIG. 11] FIG. 11 is a transverse cross-sectional view of a structural component according to another modification of the third embodiment.
[FIG. 12] FIG. 12 is a graph illustrating a relationship between a width increase rate of a top plate of a structural component and a reaction force at a stroke of 20 mm.
[FIG. 13] FIG. 13 is a graph illustrating a relationship between the width increase rate of the top plate of the structural component and a maximum reaction force.

### DESCRIPTION OF EMBODIMENTS

A structural component according to an embodiment includes a top plate and two side walls. The two side walls are arranged facing each other. The two side walls are each continuous with the top plate. The structural component includes a curved region. When viewed from a side wall side, the curved region is curved with the top plate side being an inner side of a curve and the opposite side of the top plate being an outer side of the curve. In the curved region, the two side walls are connected by the top plate on the inner side of the curve. The curved region is opened on the outer side of the curve. The top plate has a maximum width in the curved region, the maximum width being larger than a width of the top plate on both end sides of the structural component. When the curved region is viewed in transverse cross section, the width of the top plate is a length of a straight line that connects a boundary portion between one side wall of the two side walls and the top plate and a boundary portion between the other side wall and the top plate. When the curved region is viewed in transverse cross section, the sum of lengths of two side walls is larger than the width of the top plate (a first configuration).

The structural component according to the first configuration includes the curved region that is curved when viewed from the side wall side of the structural component. When the structural component having the curved region as described above is subjected to a compressive load, the load is mainly transmitted on the inner side of the curved region. Therefore, in the structural component according to the first configuration, the top plate is arranged on the inner side of the curved region. The curved region adopts an open cross section structure in which the two side walls are connected by the top plate on the inner side of the curve, while the curved region is opened on the outer side of the curve. In the curved region, since the top plate has a larger width (maximum width) as compared with that on the both end sides of the structural component, both the side walls that are continuous with the top plate also bulge outward in a width direction compared with those on the both end sides of the structural component. Here, when a compressive load that compresses between both end portions is applied to the structural component according to the first configuration, compression deformation occurs in the top plate on the inner side of the curve, and tensile deformation occurs in the end portions of both side walls on the outer side of the curve. Specifically, the end portions of both side walls are pulled in a longitudinal direction of the structural component from the state where the end portions bulge outward in the width direction of the top plate, and are consequently moved toward the inner side in the width direction of the top plate. When the end portions of both side walls are moved toward the inner side in the width direction, for example, the end portions of both side walls come into contact with each other, and a force is applied to press both side walls against each other in the curved region of the structural component. In this case, even after a reaction force of the structural component against the applied compressive load reaches the peak, the decrease in the reaction force can be easily suppressed. Accordingly, even in the later stage of the deformation, the structural component can exhibit a high reaction force.

In this manner, the structural component according to the first configuration can exhibit a high reaction force against an applied load, despite having an open section structure.

In the structural component according to the first configuration, the top plate may include sections that are arranged on both end sides of the structural component, and that have a constant width (a second configuration).

In the structural component according to the first or second configuration, the maximum width of the top plate is preferably 110% or more and 220% or less of a minimum width of the top plate (a third configuration).

According to the third configuration, the maximum width of the top plate is 110% or more and 220% or less of the minimum width. In this case, when a compressive load is applied to the structural component, the reaction force in the later stage of the deformation is likely to become higher.

The structural component according to any of the first to third configurations can further include a flange. The flange is continuous with at least one of the two side walls on the opposite side of the top plate. The flange protrudes from the at least one of the side walls in a direction intersecting the side wall. The flange preferably passes through a bottom portion of the curved region and extends along the curved region on the outer side of the curve (a fourth configuration).

In the structural component according to the fourth configuration, the flange is provided to an end portion of one or both of the two side walls at least at a position in the bottom portion of the curved region. Accordingly, since rigidity of the curved region of the structural component is increased, the peak of the reaction force against a compressive load is increased.

In the structural component according to the fourth configuration, the flange may be provided to each of the two side walls (a fifth configuration).

In the structural component according to the fifth configuration, the maximum width of the top plate may be 154% or less of a minimum width of the top plate (a sixth configuration).

In the fifth configuration, the flange is provided continuously with each of the two side walls, and the maximum width of the top plate is 154% or less of the minimum width of the top plate. Accordingly, a peak reaction force of the structural component against a compressive load can be further increased.

In the structural component according to any of the first to sixth configurations, when the curved region is viewed in transverse cross section, the two side walls may be provided symmetrically with respect to a center of the top plate (a seventh configuration).

In the seventh configuration, in transverse cross section of the curved region of the structural component, the two side walls are provided symmetrically with respect to the center of the top plate. In this case, when a compressive load is applied to the structural component, torsional deformation is less likely to occur in the curved region.

Hereinafter, embodiments of the present disclosure will be described with reference to the drawings. In each figure, the same or corresponding configurations are denoted by the same numerals, and the same description will not be repeated.

### [First Embodiment]

### (Configuration of Structural Component)

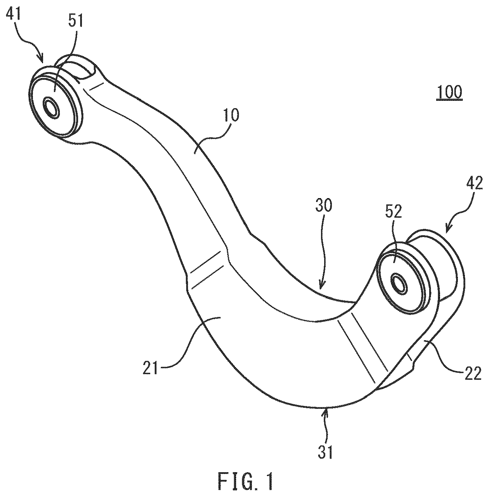

FIG. 1 is a perspective view schematically illustrating a structural component 100 according to a first embodiment. The structural component 100 is used for, for example, a vehicle body of an automobile. The structural component 100 may be, for example, a chassis part such as a suspension arm. In the present embodiment, a description will be given of a case in which the structural component 100 is an upper arm, which is a type of the suspension arm.

Referring to FIG. 1, the structural component 100 includes a top plate 10 and side walls 21 and 22.

The top plate 10 substantially or generally extends in a left-right direction of an automobile in a state where the structural component 100, which is an upper arm, is attached to the automobile. Hereinafter, a direction in which the top plate 10 extends is referred to as a longitudinal direction of the structural component 100.

The side walls 21 and 22 are arranged facing each other. The side wall 21 is continuous with the top plate 10. The side wall 22 is continuous with the top plate 10 on the opposite side of the side wall 21. The side walls 21 and 22 extend in the longitudinal direction of the structural component 100 along the top plate 10.

The structural component 100 includes a curved region 30. The curved region 30 is curved with the top plate 10 side being an inner side of a curve and the opposite side of top plate 10 being an outer side of the curve when viewed from the side wall 21 side. The curved region 30 is also curved with the top plate 10 side being the inner side of the curve and the opposite side of top plate 10 being the outer side of the curve when viewed from the side wall 22 side, which is opposite the side wall 21. In the curved region 30, the side walls 21 and 22 are connected by the top plate 10 on the inner side of the curve. On the other hand, the curved region 30 is opened on the outer side of the curve. That is, on the outer side of the curve of the curved region 30, the structural component 100 is divided, and the side wall 21 and side wall 22 are separated from each other.

When the structural component 100 is used for a vehicle body of an automobile as in the present embodiment, the curved region 30 is curved so as to be recessed downward in a state where, for example, the structural component 100 is attached to the automobile. The curved region 30 includes a bottom portion 31. The curved region 30 extends in the longitudinal direction of the structural component 100 with a curvature radius of, for example, 400 mm or less. The curved region 30 may extend in the longitudinal direction of the structural component 100 with a curvature radius of 200 mm or less. The curved region 30 preferably extends in the longitudinal direction of the structural component 100 with a curvature radius of 150 mm or less. The curvature radius of the curved region 30 is, for example, 20 mm or more, and is preferably 50 mm or more. The curvature radius in this case is a curvature radius of the inner side of the curve of the curved region 30.

Mounting portions 41 and 42 are provided at both end portions of the structural component 100 in the longitudinal direction. The mounting portions 41 and 42 are portions for attaching the structural component 100 to other parts. The top plate 10 extends from the vicinity of one mounting portion 41 to the vicinity of the other mounting portion 42. The mounting portions 41 and 42 may be, for example, burring portions formed in the side walls 21 and 22. In this case, bushes 51 and 52 are press-fit in the mounting portions 41 and 42, respectively. However, the form of the mounting portions 41 and 42 is not limited to this.

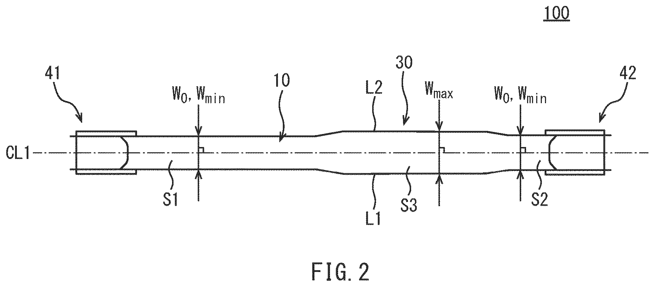

FIG. 2 is a diagram (plan view) of the structural component 100 viewed from the top plate 10 side. Referring to FIG. 2, a width of the top plate 10 varies along the longitudinal direction of the structural component 100. That is, the width of the top plate 10 is not constant throughout the entire structural component 100. The width of the top plate 10 refers to, when a straight line is drawn that is perpendicular to a width center line CL1 located exactly in the middle between a boundary line L1 between the top plate 10 and the side wall 21 (FIG. 1) and a boundary line L2 between the top plate 10 and the side wall 22 (FIG. 1) in plan view of the structural component 100, a distance from an intersection point of the straight line and the boundary line L1 to an intersection point of the straight line and the boundary line L2. A direction in which this straight line extends is referred to as a width direction of the structural component 100 or the top plate 10. In the example illustrated in FIG. 2, each of the boundary lines L1 and L2 and the width center line CL1 is linear in plan view of the structural component 100. However, at least a part of the boundary lines L1 and L2 and the width center line CL1 may be curved in plan view of the structural component 100.

The top plate 10 includes sections S1 and S2. The sections S1 and S2 are arranged at both end sides of the structural component 100 in the longitudinal direction. The section S1 is arranged adjacent to one mounting portion 41. The section S2 is arranged adjacent to the other mounting portion 42. The top plate 10 has a width W₀ in the sections S1 and S2. In the example of the present embodiment, the width W₀ of the top plate 10 is substantially constant in each of the sections S1 and S2. The width W₀ of the top plate 10 in the section S1 may be equal to or different from the width W₀ of the top plate 10 in the section S2.

The curved region 30 is arranged between the section S1 and the section S2. The top plate 10 has a maximum width Wₘₐₓ in the curved region 30. In other words, in the boundary lines L1 and L2 between the top plate 10 and the side walls 21 and 22 (FIG. 1), there is a portion in which the width of the top plate 10 is the maximum width Wₘₐₓ in a range where the center of curvature is located on the top plate 10 side, the range being from an inflection point on one end side of the structural component 100 in the longitudinal direction to an inflection point on the other end side. The top plate 10 preferably has the maximum width Wₘₐₓ at least at the position of the bottom portion 31 (FIG. 1) of the curved region 30.

The maximum width Wₘₐₓ of the top plate 10 is, for example, 101% or more of a minimum width Wₘᵢₙ of the top plate 10. The maximum width Wₘₐₓ is preferably 105% or more of the minimum width Wₘᵢₙ, and is more preferably 110% or more of the minimum width Wₘᵢₙ. Still further preferably, the maximum width Wₘₐₓ is 113% or more of the minimum width Wₘᵢₙ. The maximum width Wₘₐₓ may be 220% or less of the minimum width Wₘᵢₙ, and is preferably 217% or less of the minimum width Wₘᵢₙ. The maximum width Wₘₐₓ of the top plate 10 in the curved region 30 is naturally larger than the width W₀ of the top plate 10 in the sections S1 and S2. The width W₀ of the top plate 10 in the section S1 and/or the section S2 is typically the minimum width Wₘᵢₙ of the top plate 10. However, the top plate 10 may have the minimum width Wₘᵢₙ in a portion other than the sections S1 and S2. The top plate 10 can have the minimum width Wₘᵢₙ on end sides of the structural component 100 in the longitudinal direction relative to the curved region 30.

In the example of the present embodiment, a section S3 that has the maximum width Wₘₐₓ of the top plate 10 extends in the longitudinal direction of the structural component 100. The section S3 having the maximum width Wₘₐₓ may be arranged in the curved region 30, or may extend beyond the curved region 30.

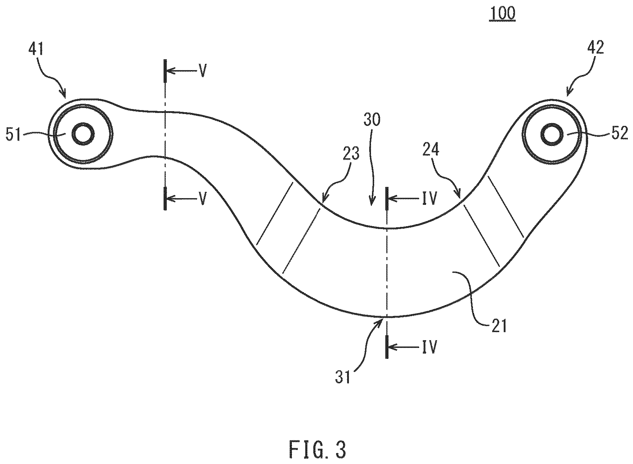

FIG. 3 is a diagram (side view) of the structural component 100 viewed from the side wall 21 side. In the example of the present embodiment, the section S3 in which the top plate 10 is wide extends in the longitudinal direction of the structural component 100 between the narrow sections S1 and S2 (FIG. 2). Therefore, in the side wall 21, steps 23 and 24 are formed in the boundary between portions continuous with the section S3 and portions continuous with the section S1 and the boundary between portions continuous with the section S3 and portions continuous with the section S2, respectively. The steps 23 and 24 may be formed on the side wall 21 so as to be horizontal in a state where the structural component 100 is used, or may be formed on the side wall 21 at an angle relative to the horizontal direction in the state where the structural component 100 is used. Although illustration is omitted, the steps 23 and 24 are formed in the side wall 22 on the opposite side as in the side wall 21.

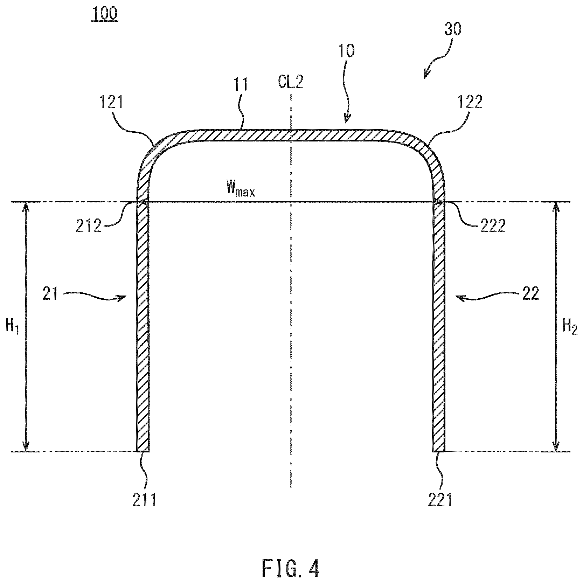

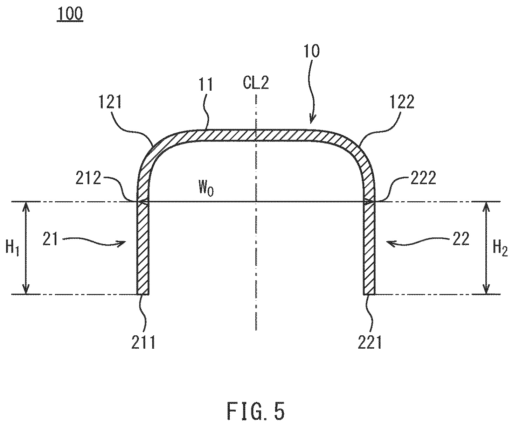

FIG. 4 and FIG. 5 are diagrams illustrating cross sections (transverse cross sections) of the structural component 100 taken along flat surfaces perpendicular to the longitudinal direction. FIG. 4 illustrates a IV-IV cross section of FIG. 3, more specifically, the transverse cross section of the structural component 100 at the position of the bottom portion 31 of the curved region 30. FIG. 5 illustrates a V-V cross section of FIG. 3, that is, the transverse cross section of the structural component 100 at a position in the vicinity of the mounting portion 41, which is one of the mounting portions 41 and 42 provided at the both end portions of the structural component 100 in the longitudinal direction.

Referring to FIG. 4, the top plate 10 includes a top plate body 11 and ridgeline portions 121 and 122. The top plate body 11 has a substantially flat shape when viewed in the transverse cross section of the structural component 100. The ridgeline portions 121 and 122 are provided continuously with both side edges of the top plate body 11. The ridgeline portion 121 is a corner portion between the top plate body 11 and one side wall 21. The ridgeline portion 122 is a corner portion between the top plate body 11 and the other side wall 22. The ridgeline portions 121 and 122 have, for example, substantially are shapes in transverse cross-sectional view of the structural component 100.

The side walls 21 and 22 are provided continuously with the ridgeline portions 121 and 122 of the top plate 10, respectively. In the curved region 30, end portions 211 and 221 of the side walls 21 and 22 located on the opposite side of the top plate 10 are open end portions. That is, the structural component 100 has an open section structure at least in the range of the curved region 30. The structural component 100 may have an open section structure over the entire longitudinal direction or nearly the entire longitudinal direction. The open section structure means that the end portion 211 of the side wall 21 and the end portion 221 of the side wall 22 are arranged to be spaced apart from each other, and the structural component 100 itself does not have a continuous structure on the end portion 211 side and the end portion 221 side.

In transverse cross-sectional view of the curved region 30, the maximum width Wₘₐₓ of the top plate 10 is a length of a straight line that connects a boundary portion 212 between the top plate 10 and the side wall 21 and a boundary portion 222 between the top plate 10 and the side wall 22. The boundary portion 212 is an R-stop of the ridgeline portion 121 of the top plate 10 on the side wall 21 side. The boundary portion 222 is an R-stop of the ridgeline portion 122 of the top plate 10 on the side wall 22 side. The boundary line L1 (FIG. 2) between the top plate 10 and the side wall 21 is obtained by connecting the boundary portion 212 along the longitudinal direction of the structural component 100. The boundary line L2 (FIG. 2) between the top plate 10 and the side wall 22 is obtained by connecting the boundary portion 222 along the longitudinal direction of the structural component 100.

In transverse cross section of the curved region 30, the sum of lengths (heights) H₁ and H₂ of the side walls 21 and 22: H₁ + H₂ is larger than the maximum width Wₘₐₓ of the top plate 10. The height H₁ of the side wall 21 is a straight-line distance from the boundary portion 212 between the side wall 21 and the top plate 10 to the end portion 211 in transverse cross section of the curved region 30. The height H₂ of the side wall 22 is a straight-line distance from the boundary portion 222 between the side wall 22 and the top plate 10 to the end portion 221 in transverse cross section of the curved region 30. Although the sum of the heights H₁ and H₂ of the side walls 21 and 22 may be sufficient if it is more than 100% of the maximum width Wₘₐₓ of the top plate 10, the sum is preferably 200% or more of the maximum width Wₘₐₓ, and is more preferably 400% or more. The sum of the heights H₁ and H₂ of the side walls 21 and 22 is larger than the maximum width Wₘₐₓ at least in the section S3 (FIG. 2) in which the top plate 10 has the maximum width Wₘₐₓ.

Referring to FIG. 5, the width W₀ of the top plate 10 in the end portion of the structural component 100 in the longitudinal direction is smaller than the width of the top plate 10 in the curved region 30. When the structural component 100 is viewed in transverse cross section in the sections S1 and S2 (FIG. 2), the width W₀ is a length of a straight line that connects the boundary portion 212 between the top plate 10 and the side wall 21 and the boundary portion 222 between the top plate 10 and the side wall 22. In the sections S1 and S2, although the sum of the heights H₁ and H₂ of the side walls 21 and 22: H₁ + H₂ may be larger than the width W₀ of the top plate 10, the sum may be smaller than the width W₀ In the example of the present embodiment, the heights H₁ and H₂ of the side walls 21 and 22 are smaller than those in the curved region 30 in the both end portions of the structural component 100 in the longitudinal direction. That is, the heights H₁ and H₂ of the side walls 21 and 22 vary along the longitudinal direction of the structural component 100. However, the heights H₁ and H₂ of the side walls 21 and 22 may be constant throughout the overall length of the structural component 100.

In the example of the present embodiment, when the curved region 30 is viewed in transverse cross section, the side walls 21 and 22 are provided symmetrically with respect to the center of the top plate 10. More specifically, in transverse cross section of the curved region 30, the side walls 21 and 22 are provided symmetrically with respect to a width center line CL2 of the top plate 10, the width center line CL2 passing through the middle point of a straight line connecting the boundary portion 212 of the side wall 21 with respect to the top plate 10 and the boundary portion 222 of the side wall 22 with respect to the top plate 10, and being perpendicular to the straight line. The side walls 21 and 22 are preferably symmetrical with respect to the center of the top plate 10 over at least the overall length of the curved region 30. The side walls 21 and 22 may be symmetrical with respect to the center of the top plate 10 along the overall length of the structural component 100.

### (Effects)

The structural component 100 according to the present embodiment includes the curved region 30 that is curved when viewed from the side wall 21 side and the side wall 22 side. The curved region 30 adopts an open section structure that is opened on the outer side of the curve. In other words, in the curved region 30, the end portion 211 of the side wall 21 and the end portion 221 of the side wall 22 are arranged to be spaced apart from each other. In the curved region 30, since the top plate 10 has a larger width (the maximum width) Wₘₐₓ as compared with the width on the both end sides of the structural component 100 in the longitudinal direction, both the side walls 21 and 22 that are continuous with the top plate also bulge outward in the width direction compared with those on the both end sides of the structural component 100. When a compressive load that compresses between the mounting portions 41 and 42 is applied to this structural component 100, compression deformation occurs in the top plate 10 on the inner side of the curve and the boundary portions 212 and 222 between the top plate 10 and the side walls 21 and 22, and tensile deformation occurs in the end portions 211 and 221 of the side walls 21 and 22 on the outer side of the curve. That is, when the structural component 100 receives a compressive load, the end portions 211 and 221 of the side walls 21 and 22 are pulled in the longitudinal direction of the structural component 100, and are stretched from the state where the end portions 211 and 221 bulge outward in the width direction to be moved toward the inner side in the width direction. Accordingly, when an inclusion does not exist between the end portions 211 and 221, the end portion 211 of the side wall 21 and the end portion 221 of the side wall 22 come into direct contact with each other, the transverse cross section of the curved region 30 becomes a closed cross section in a pseudo manner, and a force is applied to press the side walls 21 and 22 against each other. When an inclusion exists between the end portions 211 and 221, the end portions 211 and 221 come into contact with the inclusion from both sides, and a force is applied to press the side walls 21 and 22 against each other. Therefore, even after the reaction force of the structural component 100 against the compressive load reaches the peak, the decrease in the reaction force is suppressed. Accordingly, even in the later stage of the deformation, the structural component 100 can exhibit a high reaction force.

In this manner, although the structural component 100 according to the present embodiment has the open section structure in which the end portion 211 of the side wall 21 and the end portion 221 of the side wall 22 are spaced apart in the width direction, the structural component 100 can exhibit a high reaction force against the applied compressive load. In the structural component 100 of the present embodiment, the opening between the side wall 21 and the side wall 22 is not closed. However, the opening between the side wall 21 and the side wall 22 may be closed as long as a force can be applied to press the side walls 21 and 22 against each other when a compressive load is applied to the structural component 100. For example, the side wall 21 and the side wall 22 may be connected by a part separate from the structural component 100.

In the structural component 100 according to the present embodiment, the maximum width Wₘₐₓ of the top plate 10 is preferably 110% or more and 220% or less of the minimum width Wₘᵢₙ of the top plate 10. In this case, when a compressive load is applied to the structural component 100, the reaction force in the later stage of the deformation is likely to become higher.

In the present embodiment, when the curved region 30 is viewed in transverse cross section, the side walls 21 and 22 are provided symmetrically with respect to the center of the top plate 10. Accordingly, when a compressive load is applied to the structural component 100, the occurrence of torsional deformation in the curved region 30 is suppressed. However, in transverse cross section of the curved region 30, the side walls 21 and 22 may not necessarily be symmetrical with respect to the center of the top plate 10.

### [Second Embodiment]

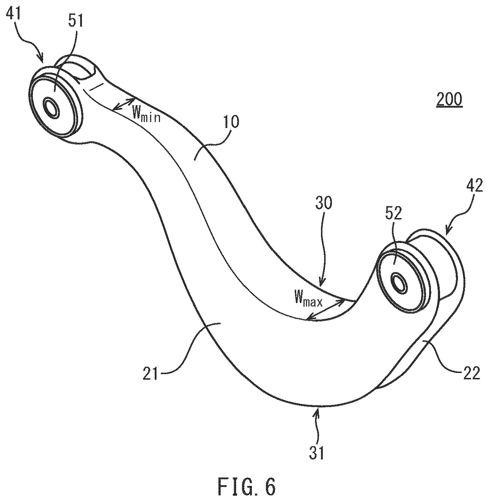

FIG. 6 is a perspective view schematically illustrating a structural component 200 according to a second embodiment. The structural component 200 according to the present embodiment has basically the same configuration as the structural component 100 according to the first embodiment (FIG. 1 to FIG. 5). However, while the section S3 (FIG. 2) having the maximum width Wₘₐₓ of the top plate 10 extends in the longitudinal direction of the structural component 100 in the first embodiment, the top plate 10 has the maximum width Wₘₐₓ at one point in the curved region 30 in the present embodiment.

Referring to FIG. 6, also in the present embodiment, the top plate 10 has the maximum width Wₘₐₓ, which is larger than the width W₀ (FIG. 2) on the both end sides of the structural component 200 in the longitudinal direction, in the curved region 30. Unlike the first embodiment, the width of the top plate 10 is gradually increased as a distance from the both ends of the structural component 200 in the longitudinal direction is increased, and becomes the maximum width Wₘₐₓ at one point in the curved region 30. The top plate 10 preferably has the maximum width Wₘₐₓ in or in the vicinity of the bottom portion 31 of the curved region 30. Top plate 10 can have the minimum width Wₘᵢₙ on the end sides of the structural component 200 in the longitudinal direction. Also in the structural component 200 according to the present embodiment, the same effects as those of the structural component 100 according to the first embodiment can be achieved.

### [Third Embodiment]

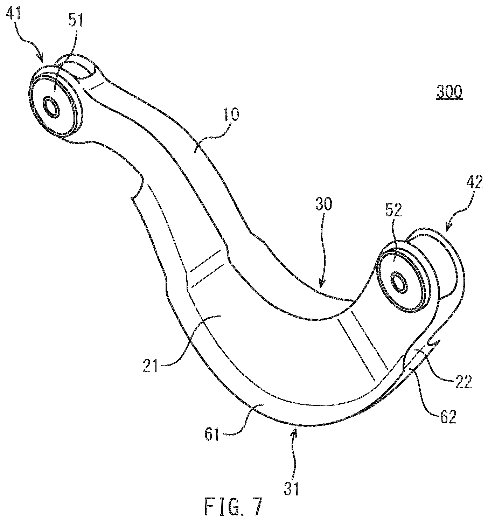

FIG. 7 is a perspective view schematically illustrating a structural component 300 according to a third embodiment. The structural component 300 according to the present embodiment has basically the same configuration as the structural component 100 according to the first embodiment (FIG. 1 to FIG. 5). However, the structural component 300 is different from the structural component 100 according to the first embodiment in that the structural component 300 includes flanges 61 and 62.

In the structural component 300, the flanges 61 and 62 are continuous with the side walls 21 and 22, respectively, on the opposite side of the top plate 10. One flange 61 is provided continuously with the side wall 21. The other flange 62 is provided continuously with the side wall 22. In the present embodiment, the flanges 61 and 62 protrude from the side walls 21 and 22 toward the outer side of these.

The flanges 61 and 62 preferably pass through the bottom portion 31 and extend along the curved region 30 on the outer side of the curve of the curved region 30. The flanges 61 and 62 may extend along the entire longitudinal direction of the structural component 300, or may be provided in a part of the structural component 300. In the example of the present embodiment, the flanges 61 and 62 extend to the vicinity of the both ends of the structural component 300 in the longitudinal direction. The portions of the flanges 61 and 62 on the both end sides of the structural component 300 may gradually disappear toward the both ends of the structural component 100.

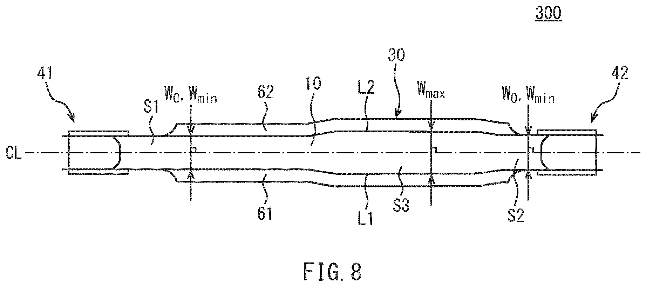

FIG. 8 is a diagram (plan view) of the structural component 300 viewed from the top plate 10 side. Referring to FIG. 8, the maximum width Wₘₐₓ of the top plate 10 is, for example, 101% or more of the minimum width Wₘᵢₙ of the top plate 10 as in the first embodiment. When the structural component 300 is provided with the flanges 61 and 62 as in the present embodiment, the maximum width Wₘₐₓ is preferably 154% or less of the minimum width Wₘᵢₙ, and is more preferably 148% or less. The maximum width Wₘₐₓ is still further preferably 107% or more and 141% or less of the minimum width Wₘᵢₙ.

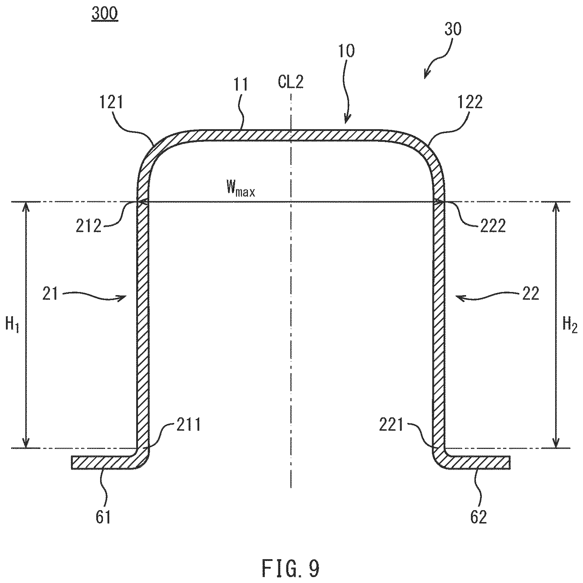

FIG. 9 is a diagram illustrating a cross section (transverse cross section) of the structural component 300 taken along a flat surface perpendicular to the longitudinal direction. FIG. 9 illustrates the transverse cross section of the structural component 300 at the position of the bottom portion 31 of the curved region 30. Referring to FIG. 9, the flange 61 is continuous with one side wall 21 on the opposite side of the top plate 10. That is, the flange 61 is provided continuously with the end portion 211 of the side wall 21. The flange 61 protrudes from the side wall 21 in a direction intersecting the side wall 21. In the present embodiment, the flange 61 protrudes toward the outer side of the structural component 300 from the end portion 211 of the side wall 21.

The flange 62 is continuous with the other side wall 22 on the opposite side of the top plate 10. That is, the flange 62 is provided continuously with the end portion 221 of the side wall 22. The flange 62 protrudes from the side wall 22 in a direction intersecting the side wall 22. In the present embodiment, the flange 62 protrudes toward the outer side of the structural component 300 from the end portion 221 of the side wall 22. The flange 62 protrudes toward the opposite side of the flange 61.

The flanges 61 and 62 extend along the end portions 211 and 221 of the side walls 21 and 22 at least in a range including the bottom portion 31 (FIG. 7) of the curved region 30. The flanges 61 and 62 may extend along the end portions 211 and 221 of the side walls 21 and 22 along the overall length of the curved region 30. The flanges 61 and 62 may extend along the end portions 211 and 221 of the side walls 21 and 22 to, for example, the vicinity of the mounting portions 41 and 42 (FIG. 7).

In transverse cross section of the curved region 30, the flanges 61 and 62 are preferably symmetrical with respect to the center of the top plate 10. That is, when the curved region 30 is viewed in transverse cross section, the flanges 61 and 62 are preferably provided symmetrically with respect to the width center line CL2 of the top plate 10. The flanges 61 and 62 are preferably symmetrical with respect to the center of the top plate 10 along at least the overall length of the curved region 30. The flanges 61 and 62 may be symmetrical with respect to the center of the top plate 10 along the overall length of the structural component 300.

In the example of FIG. 9, in transverse cross-sectional view of the curved region 30, the flanges 61 and 62 are substantially parallel to the top plate body 11. However, the flanges 61 and 62 may be inclined with respect to the top plate body 11 in transverse cross-sectional view of the curved region 30.

Although a length (width) of the flanges 61 and 62 in the width direction of the structural component 300 may be constant along the overall length of the flanges 61 and 62, the length (width) may vary along an extending direction of the flanges 61 and 62. For example, in the bottom portion 31 (FIG. 7) of the curved region 30, the width of the flanges 61 and 62 may be increased as compared with the width in the both end portions of the structural component 300 in the longitudinal direction. In this case, the width of the flanges 61 and 62 is preferably greatest in the bottom portion 31 of the curved region 30. In addition, the width of the flanges 61 and 62 is preferably gradually decreased and disappears toward the both ends on the both end sides of the structural component 300 in the longitudinal direction. However, the width of the flanges 61 and 62 may suddenly vary on the both end sides of the structural component 300 in the longitudinal direction.

Also in the structural component 300 according to the present embodiment, as in the first embodiment, when a compressive load that compresses between the mounting portions 41 and 42 is applied, the end portions 211 and 221 of the side walls 21 and 22 directly or indirectly come into contact with each other, and a force can be applied to press the side walls 21 and 22 against each other, and thus even in the later stage of the deformation, a high reaction force can be exhibited. In addition, since the structural component 300 is provided with the flanges 61 and 62, the rigidity of the structural component 300 against compressive loads is increased. Accordingly, although the structural component 300 has an open section structure, the structural component 300 can exhibit a high peak reaction force when a compressive load is applied.

In the structural component 300 of the present embodiment, the top plate 10 has the maximum width Wₘₐₓ in the curved region 30 as in the other embodiments. When the flanges 61 and 62 are provided continuously with the side walls 21 and 22, the maximum width Wₘₐₓ of the top plate 10 is preferably 154% or less of the minimum width Wₘᵢₙ. Accordingly, the peak reaction force of the structural component 300 against a compressive load can be further increased.

In the present embodiment, the maximum width Wₘₐₓ of the top plate 10 is more preferably 101% or more and 148% or less of the minimum width Wₘᵢₙ, and still further preferably 107% or more and 141% or less of the minimum width Wₘᵢₙ. Accordingly, the structural component 300 can exhibit a still higher peak reaction force against a compressive load.

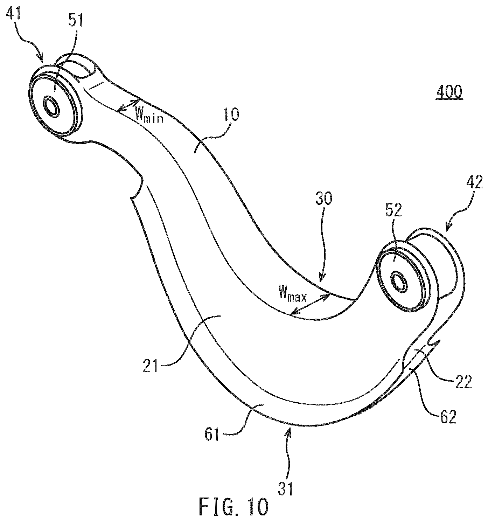

The structural component 300 according to the present embodiment is obtained by providing the structural component 100 according to the first embodiment with the flanges 61 and 62. Similarly, as in a structural component 400 illustrated in FIG. 10, the structural component 200 according to the second embodiment can also be provided with the flanges 61 and 62. Also in the structural component 400, the flanges 61 and 62 preferably extend along at least a part of the curved region 30.

In the structural component 400, the maximum width Wₘₐₓ of the top plate 10 is preferably 154% or less of the minimum width Wₘᵢₙ as in the structural component 300 according to the third embodiment. The maximum width Wₘₐₓ is, for example, 101% or more of the minimum width Wₘᵢₙ. The maximum width Wₘₐₓ is preferably 101% or more and 148% or less of the minimum width Wₘᵢₙ, and more preferably 107% or more and 141% or less of the minimum width Wₘᵢₙ. Accordingly, the peak reaction force of the structural component 300 against a compressive load can be further increased as in the third embodiment.

In the structural component 300 according to the present embodiment, when the curved region 30 is viewed in transverse cross section, the flanges 61 and 62 are provided symmetrically with respect to the center of the top plate 10. Accordingly, when a compressive load is applied to the structural component 300, torsional deformation is less likely to occur in the curved region 30. However, the flanges 61 and 62 may not necessarily be provided symmetrically with respect to the center of the top plate 10. Similarly, also in the structural component 400 illustrated in FIG. 10, when the curved region 30 is viewed in transverse cross section, the flanges 61 and 62 may or may not be provided symmetrically with respect to the center of the top plate 10.

The structural component 300 according to the present embodiment and the structural component 400 illustrated in FIG. 10 include the flanges 61 and 62 that are continuous with the side walls 21 and 22, respectively, on the opposite side of the top plate 10. However, the structural components 300 and 400 may not include one of the flanges 61 and 62.

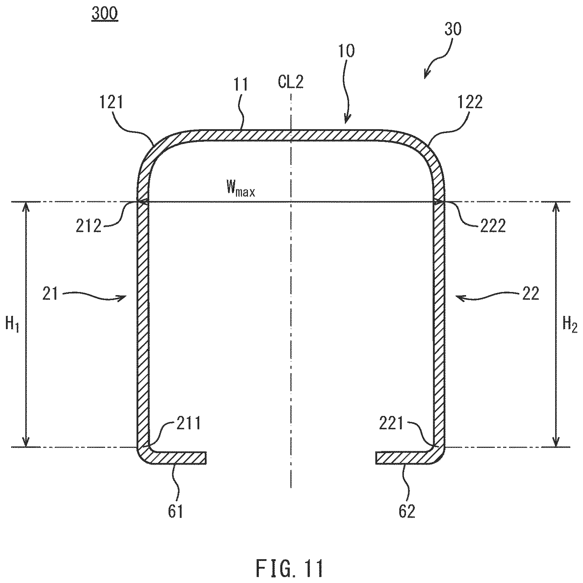

In the present embodiment, the flanges 61 and 62 protrude from the side walls 21 and 22 toward the outer side of the structural component 300. However, as illustrated in FIG. 11, the flanges 61 and 62 can also protrude from the side walls 21 and 22 toward the inner side of the structural component 300. Alternatively, one of the flanges 61 and 62 may protrude toward the outer side of the structural component 300, and the other of the flanges 61 and 62 may protrude toward the inner side of the structural component 300. When the structural component 300 includes only one of the flanges 61 and 62, this flange may protrude toward the outer side of the structural component 300, or may protrude toward the inner side of the structural component 300.

Similarly, also in the structural component 400 illustrated in FIG. 10, the flanges 61 and 62 can also protrude from the side walls 21 and 22 toward the inner side. Alternatively, one of the flanges 61 and 62 may protrude from the side walls 21 and 22 toward the outer side, and the other of the flanges 61 and 62 may protrude from the side walls 21 and 22 toward the inner side. When the structural component 400 includes only one of the flanges 61 and 62, this flange may protrude toward the outer side of the structural component 400, or may protrude toward the inner side of the structural component 400.

Although the embodiments according to the present disclosure have been described above, the present disclosure is not limited to the above-described embodiments, and various modifications can be made as long as the modifications do not depart from the spirit of the present disclosure.

### EXAMPLES

Hereinafter, the present disclosure will be described in more detail with examples. However, the present disclosure is not limited to the following examples.

### [First Example]

In order to confirm the effects by the present disclosure, a numerical analysis using commercially available structural analysis software (Abaqus, manufactured by Dassault Systemes) was performed on a structural component having the same shape as the structural component 100 according to the first embodiment (FIG. 1 to FIG. 5). In this analysis, the reaction force when applying a compressive load that compresses between mounting portions (between fastening points) to the structural component, more specifically, the reaction force in a case in which the displacement stroke in a load direction is 20 mm (at a stroke of 20 mm), was evaluated as the reaction force in the later stage of deformation. For comparison, a similar analysis was performed on a structural component having a normal open section structure, that is, the structural component in which a width of a top plate does not vary along the overall length.

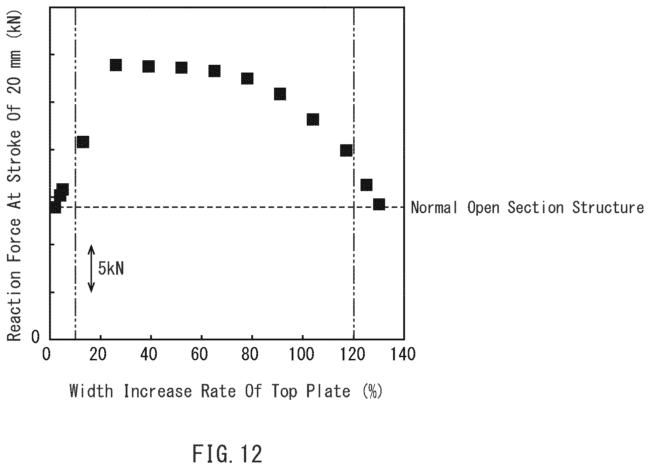

FIG. 12 is a graph illustrating a result of the analysis. In FIG. 12, a relationship between a width increase rate (%) of a top plate and the reaction force at a stroke of 20 mm (kN) is illustrated. The width increase rate of the top plate is a value obtained by 100 × {(Wₘₐₓ - Wₘᵢₙ)/Wₘᵢₙ}, where the maximum width of the top plate is Wₘₐₓ, and the minimum width is Wₘᵢₙ. As can be seen from FIG. 12, in the structural component (the width increase rate > 0%) in which the width of the top plate varies and the width of the top plate becomes the maximum width Wₘₐₓ in the curved region, the reaction force at a stroke of 20 mm was significantly increased, compared with the structural component (the width increase rate = 0%) having the normal open section structure. In this analysis, it was confirmed that the reaction force at a stroke of 20 mm was particularly large in a range in which the width increase rate of the top plate is 10% or more and 120% or less (the maximum width Wₘₐₓ of the top plate is 110% or more and 220% or less of the minimum width Wₘᵢₙ).

### [Second Example]

A numerical analysis using commercially available structural analysis software (Abaqus, manufactured by Dassault Systemes) was performed on a structural component having the same shape as the structural component 300 according to the third embodiment (FIG. 7 to FIG. 9). In this analysis, a maximum reaction force (peak reaction force) when applying a compressive load that compresses between mounting portions (between fastening points) to the structural component was evaluated. For comparison, a similar analysis was also performed on a structural component having a normal open section structure, that is, the structural component in which a width of a top plate does not vary along the overall length, and both side walls are not provided with flanges (Comparative Example 1). In addition, a similar analysis was also performed on a structural component in which both side walls are provided with flanges, but a width of a top plate does not vary along the overall length (Comparative Example 2).

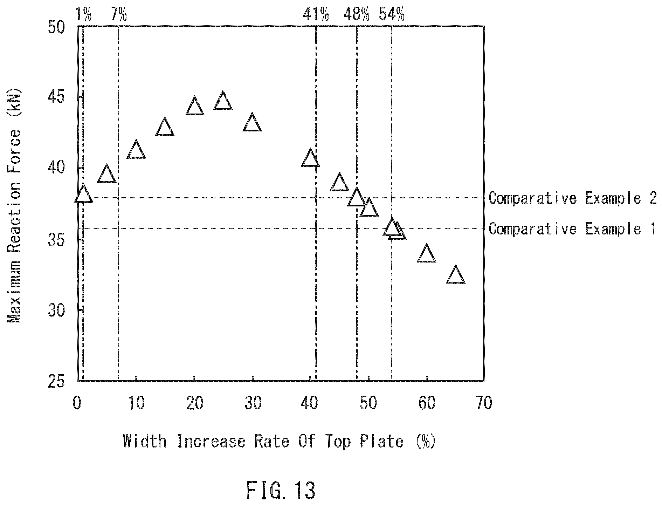

FIG. 13 is a graph illustrating a result of the analysis. In FIG. 13, a relationship between the width increase rate (%) of a top plate and the maximum reaction force (kN) is illustrated. As illustrated in FIG. 13, in the case of the structural component in which both side walls are provided with flanges, by setting the width increase rate of the top plate to more than 0% and 54% or less, the maximum reaction force was increased compared with the structural component according to Comparative Example 1 (the width increase rate 0%, no flange). The maximum reaction force of Comparative Example 1 was 35.80 kN, and the maximum reaction force in the case in which the width increase rate of the top plate was 54% was 35.94 kN.

In addition, in the case of the structural component in which both side walls are provided with the flanges, by setting the width increase rate of the top plate to 1% or more and 48% or less, the maximum reaction force was increased compared with the structural component according to Comparative Example 2 (the width increase rate 0%, with flanges). The maximum reaction force in Comparative Example 2 was 37.92 kN, the maximum reaction force was 38.26 kN in the case in which the width increase rate of the top plate was 1%, and the maximum reaction force was 37.97 kN in the case in which the width increase rate of the top plate was 48%.

Furthermore, when the width increase rate of the top plate was 7% or more and 41% or less, the maximum reaction force was increased by approximately 5 kN or more compared with that in Comparative Example 1.

According to this analysis, it was confirmed that the structural component exhibited a high maximum reaction force against a compressive load by providing both vertical walls with the flanges and setting the width increase rate of the top plate to more than 0% and 54% or less (the maximum width Wₘₐₓ was more than 100% and 154% or less of the minimum width). In addition, it was confirmed that the maximum reaction force was further improved by setting the width increase rate of the top plate to 1% or more and 48% or less (the maximum width Wₘₐₓ was 101% or more and 148% or less of the minimum width Wₘᵢₙ), and the maximum reaction force was still further improved by setting the width increase rate of the top plate to 7% or more and 41% or less (the maximum width Wₘₐₓ was 107% or more and 141% or less of the minimum width Wₘᵢₙ).

### REFERENCE SIGNS LIST

100, 200, 300, 400: structural component
10: top plate
21, 22: side wall
212, 222: boundary portion
30: curved region
31: bottom portion
61, 62: flange
S1, S2: section

## Claims

1. A structural component comprising:
a top plate; and
two side walls that are arranged facing each other, and that are each continuous with the top plate,
wherein the structural component includes a curved region which is curved with the top plate side being an inner side of a curve and an opposite side of the top plate being an outer side of the curve when viewed from a side wall side, the two side walls are connected by the top plate on the inner side of the curve in the curved region, and the curved region is opened on the outer side of the curve,
when the curved region is viewed in transverse cross section, in a case in which a length of a straight line that connects a boundary portion between one side wall of the two side walls and the top plate and a boundary portion between another side wall and the top plate is taken as a width of the top plate, the top plate has a maximum width in the curved region, the maximum width being larger than the width of the top plate on both end sides of the structural component, and
when the curved region is viewed in transverse cross section, a sum of lengths of the two side walls is larger than the width of the top plate.

2. The structural component according to claim 1,
wherein the top plate includes sections that are arranged on both end sides of the structural component, and that have a constant width.

3. The structural component according to claim 1,
wherein the maximum width is 110% or more and 220% or less of a minimum width of the top plate.

4. The structural component according to claim 1, further comprising:
a flange that is continuous with at least one of the two side walls on the opposite side of the top plate, and that protrudes from the at least one of the side walls in a direction intersecting the side wall,
wherein the flange passes through a bottom portion of the curved region and extends along the curved region on the outer side of the curve.

5. The structural component according to claim 4,
wherein the flange is provided to each of the two side walls.

6. The structural component according to claim 5,
wherein the maximum width is 154% or less of a minimum width of the top plate.

7. The structural component according to any one of claims 1 to 6,
wherein, when the curved region is viewed in transverse cross section, the two side walls are provided symmetrically with respect to a center of the top plate.
